Europäisches Patentamt

European Patent Office

Office européen des brevets

(11) Publication number: **0 442 570 A1**

# EUROPEAN PATENT APPLICATION

(21) Application number: **91200278.9**

(22) Date of filing: **09.02.91**

(51) Int. Cl.⁵: **B62D 7/22**

(30) Priority: **14.02.90 BE 9000164**

(43) Date of publication of application:
**21.08.91 Bulletin 91/34**

(84) Designated Contracting States:
**AT BE CH DE ES FR GB IT LI LU NL SE**

(71) Applicant: **VOLVO CAR SINT-TRUIDEN,
naamloze vennootschap
Rellestraat 2**
**B-3800 Sint-Truiden(BE)**

(72) Inventor: **Sliwinski, Marc
Wijngaardstraat 4
B-3580 Neerpelt(BE)**

(74) Representative: **Donné, Eddy
Bureau M.F.J. Bockstael nv Arenbergstraat
13
B-2000 Antwerpen(BE)**

(54) **Damper for the steering gear of a car.**

(57) Damper for the steering gear of a car, charac-
terised in that part of the steering column (3, 4, 6) is
provided with at least one ring-shaped disc (17)
which, when rotating the aforementioned part of the
steering column (3, 4, 6) is moved within a fluid (29).

Fig.2

Rank Xerox (UK) Business Services

This invention concerns a damper for the steering gear of a car, more specifically a non-powered steering gear.

It is general knowledge that minimum friction and maximum wear-and-tear within the steering housing of a car will occur in the straightforward position of the steering gear, namely when the steering gear is set for driving in a straight line.

Friction within the steering housing will thus decrease or stop altogether which, after a period of time, will lead to the driver experiencing unusual sensations. These are caused by either the oscillation of the car when one of the front wheels encounters a bump or when the driver, after negotiating a bend, has let go of the steering wheel, thus allowing it to revert to the position for driving in a straight line.

Indeed, not only will the vehicle revert to the position for straight-line driving, but it may pass through that setting, leading to dangerous road situations.

Several solutions have therefore been proposed in order to prevent friction in the straight-line setting from receding or ceasing altogether i.e. maintaining sufficient friction between the parts of the steering housing, thus affording pleasant and comfortable driving conditions in the car, as well as the highest possible safety standards.

In the case of a rack-and-pinion type steering housing, for example, 40% of the friction is created between the pinion and the rack; 40% between the rack and the pressure piece which the latter presses against the pinion and 20% in the bearings, bellows and suchlike.

In order to maintain such friction at a sufficient level so as to avoid oscillation of the vehicle and, more specifically the steering gear, steering housing dampers have been proposed of the so-called linear type, one end of which is connected to a steering housing element making a linear or quasi linear movement, the rack for example, whilst the other end is attached to a fixed part of the vehicle whereby fluid through-flow is applied as a damping source from one vessel to the other.

The major drawback of this type of steering housing damper is the relatively high cost, together with the extra room they require under the bonnet.

Furthermore, steering housing dampers have been proposed whereby overall friction is retained within the steering housing, more specifically around the shaft carrying the pinion, by incorporating springs or other mechanical means which exert additional friction on the shaft.

The drawback of this type of steering housing damper, however, resides in the fact that driving the vehicle requires extra effort on the part of the driver since he/she will have to consistently contend with this additional, albeit minor, friction.

The current invention concerns a steering housing damper which overcomes the drawbacks of the known steering housing dampers whilst offering a damper which is compact, of a straightforward design, is extremely cost-effective and whereby, notwithstanding continuous and additional pressure exerted on the shaft carrying the pinion, no additional efforts are required by the driver, and whereby the damper operates very smoothly while the exerted friction is negligible.

The steering housing damper in accordance with the invention can be applied to rack-and-pinion type steering housing or any other type of steering housing.

The steering housing damper displaying the aforementioned and certain other characteristics is designed for this purpose since a section of the intermediate shaft is provided with at least one ring-shaped disc which, when rotating the intermediate shaft section, is moved within the fluid.

Indeed, by rotating a ring-shaped disc firmly attached to the pinion shaft within a thin yet viscous fluid, frictional resistance is created between the ring-shaped disc and the actual steering housing which develops into a frictional force culminating in the required counteracting moment which obviously depends on the viscosity of the fluid within which the disc is immersed, the thickness of the fluid layer and the rotational speed of the disc.

Given the relative angular speed differences, the damper thus creates a specific damping moment which is determined by the aforementioned parameters.

In a specific application, so-called electro-viscous fluids can be used, in other words fluids in respect of which the viscosity can be altered by changing the electric tension.

In order to explain the characteristics of the invention, by way of example only, and without being limitative in any way, the following preferred embodiments are described with reference to the accompanying drawings, where:

Figure 1 shows a steering gear in perspective which incorporates a damper in accordance with the invention;

Figure 2 shows a cross-section according to line II-II in figure 1, to a larger scale;

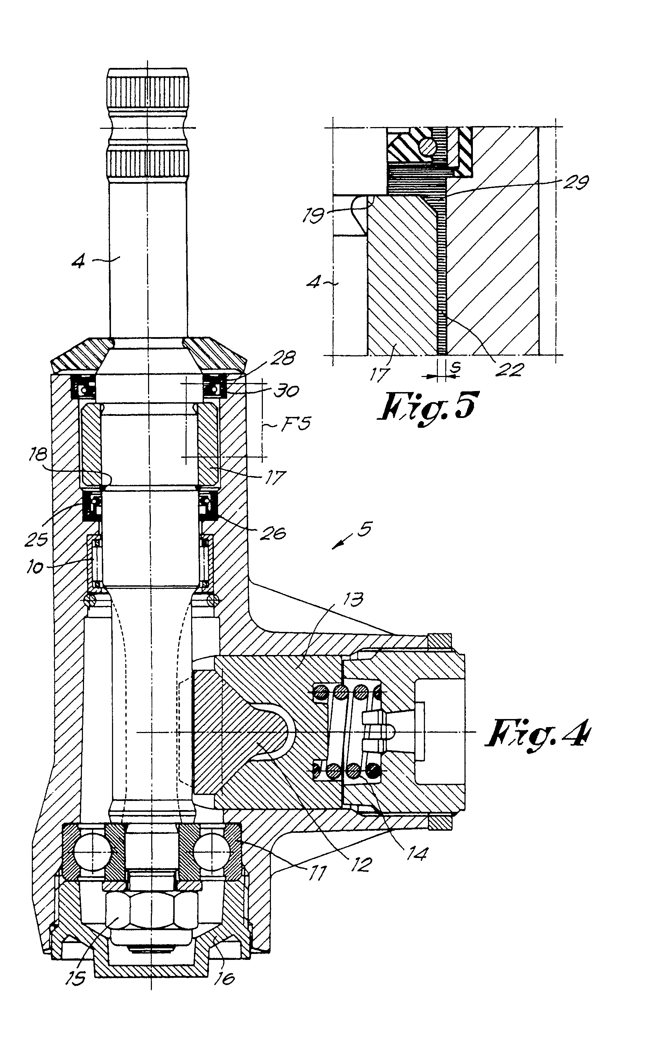

Figure 3 shows the part indicated by F3 in figure 2 to an even larger scale;

Figure 4 shows a view which is similar to figure 2 but which is a variant of the embodiment;

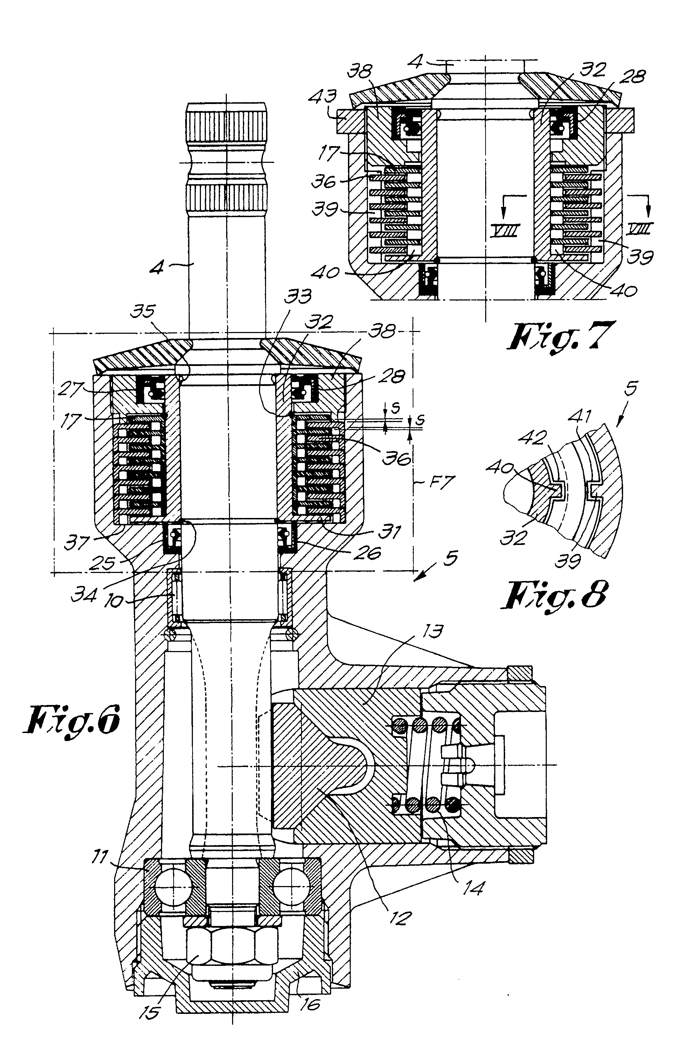

Figure 5 shows the part indicated by F5 in figure 4 to a larger scale;

Figure 6 shows a view which is similar to figure 2 but which is a second variant of the embodiment;

Figure 7 shows a variant of the part which is indicated by F7 in figure 6;

Figure 8 shows a local cross-section according to line XIII-XIII in figure 7;

Figures 9 and 10 show views which correspond to figures 3 and 4 respectively but which are special embodiments.

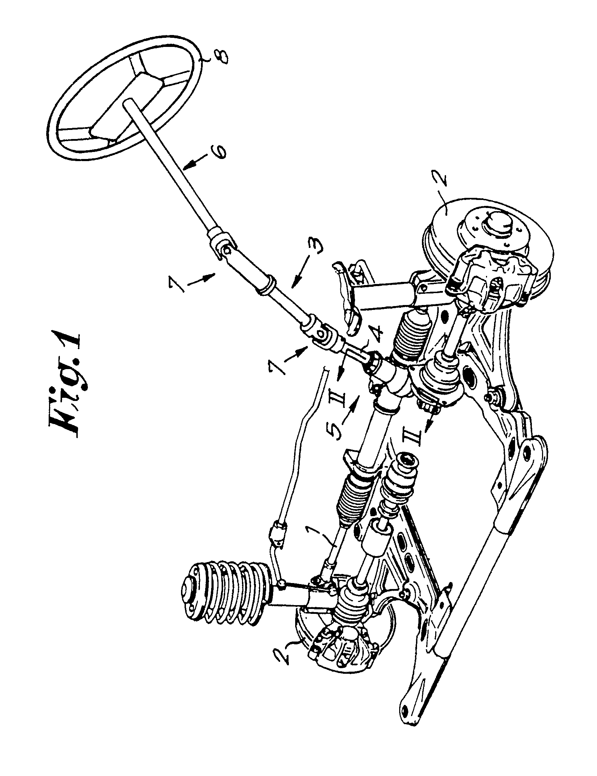

As indicated in figure 1, the steering gear mainly comprises a track rod (1) which is linked to the wheels (2); the intermediate shaft (3) which mostly consists of various parts; the pinion shaft (4) which is supported within bushes in the steering housing (5), and the steering shaft (6), whereby these shafts are interconnected by means of universal joints (7) and whereby the steering shaft (6) is connected at the free end to the steering wheel (8).

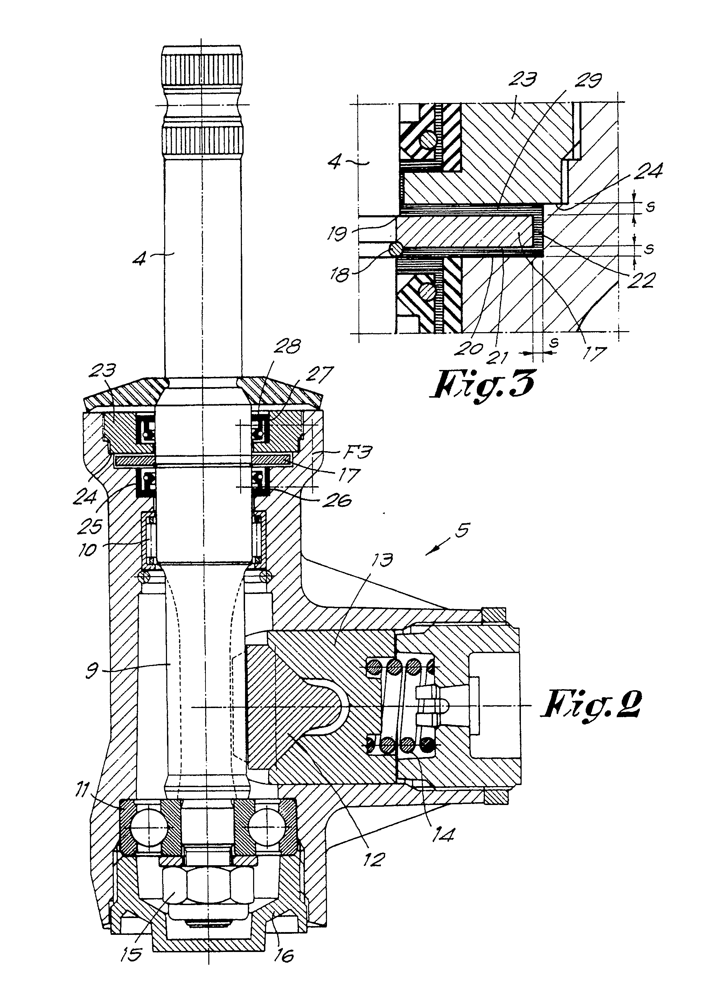

Figure 2 shows a cross-section of a steering housing in accordance with the invention, the main parts being the pinion (9) which forms an inherent part together with the pinion shaft (4). The pinion shaft (4) is adequately supported within bushes in the body of the steering housing (5) for example by means of a roller bearing (10) and a ball bearing (11). The pinion (9) and a rack (12) mesh, whereby, as is commonly known, the rack is constantly pressed against the pinion (9) by means of a pressure piece (13) and under the impact of a spring (14).

The pinion shaft (4) is kept axially fixed because it has been securely fastened, for example by means of a nut (15) on the ball bearing (11), whilst the latter is securely fastened to the body of the steering housing (5) by means of a screwed plug (16).

The damper in accordance with the invention in this embodiment mainly consists of a ring-shaped disc (17) which is adequately attached to a pinion shaft (4) whereby, for example this ring-shaped disc by means of a coil ring (18) is pressed against a stop (19) which, for this purpose, has been fitted on the pinion shaft (4). This ring-shaped disc (17) is located in such a way vis-à-vis a recess or chamber (20) within the body of the steering housing (5) that the lower wall (21) and side wall (22) remain at a suitable, relatively small distance (S) from the adjacent walls of the above chamber (20). This distance (S) is determined by the type of vehicle, the viscosity of the fluid and the required damping factor and can, for example, be between 0.1 mm and 1.5 mm.

The aforementioned chamber (20) is also sealed off by a screwed plug (23) which is screwed down to a stop (24), thus ensuring that a distance (S) is maintained between the lower wall of the screwed plug (23) and the upper wall of the ring-shaped disc (17).

Under the chamber (20), within the body of the steering housing (5), provision has been made for a second chamber (25) in which a hydraulic sealing ring (26) is fitted, whilst provision has also been made within the screwed plug (23) for a chamber (27) in which a hydraulic sealing ring (28) is fitted.

The space created between the hydraulic sealing rings 26 and 28 i.e. the space between the body of the steering housing (5), the screwed plug (23) and the adjacent sides of the ring-shaped disc (17), is completely filled with a fluid (29), preferably oil. The above clearly shows that, in the event of an involuntary rotation of the shaft (4) vis-à-vis the body of the steering housing (5), a counteracting moment is exerted on the shaft (4) which will neutralise the involuntary rotation due to the frictional force created between the ring-shaped disc (17) and the fluid (29).

Needless to say, the resulting frictional force will depend on the viscosity of the fluid (29) together with the thickness of the layer of fluid (29) i.e. the distance (S) between the body of the steering housing (5), the screwed plug (23) and the ring-shaped disc (17).

Figure 4 shows an embodiment in which the ring-shaped disc (17) is relatively thick. As a result, the resulting frictional force will mainly depend on the circumferential surface of the ring-shaped disc (17).

In this case, no provision has been made for a screwed plug (23) but the hydraulic sealing ring (28) is directly fitted in a chamber (30) within the body of the steering housing (5).

Figure 6 shows a variant whereby provision has been made for various ring-shaped discs (17) which are fitted on top of each other at an appropriate distance from each other between the lower wall (31) of a bush (32) as well as a coil ring (33) which is incorporated within the bush (32) for this purpose. The bush (32) itself is fixed to the pinion shaft (4) by means of the mesh of a coil ring (34) and a stop (35) on the pinion shaft (4).

Provision has been made for a ring-shaped disc (36) between each pair of discs (17), whereby the ring-shaped discs (36) are located between a stop (37) in the body of the steering housing (5) and the lower side of a screwed plug (38) within which the hydraulic sealing ring (28) is incorporated.

With a view to maintaining an appropriate distance (S) between both the group of ring-shaped discs (17) and the group of ring-shaped discs (36), the ring-shaped discs can be positioned in an L-shape, as shown in figure 6.

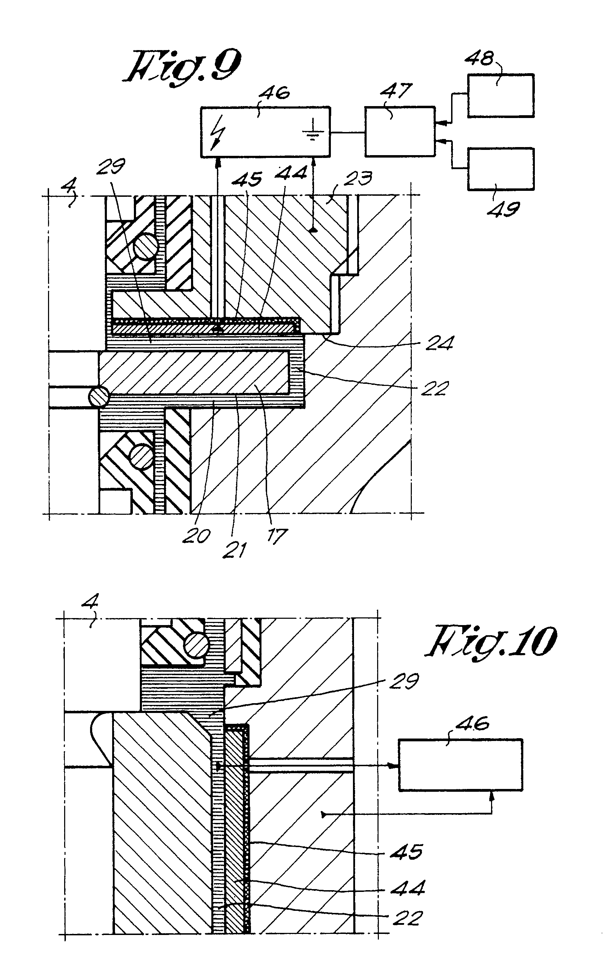

Figures 7 and 8 show a variant whereby discs 17 and 39 respectively are made up of simple, flat discs which have been loosely fitted on top of each other and which are only radially fixed vis-à-vis the body of the steering housing (5) and the bush (32) respectively, since both the body of the steering housing (5) and the bush (32) have been provided with one or more teeth, ribbing or any similar protrusion, 39 and 40 respectively, over which the rings 36 and 17 respectively are slipped via a corresponding recess 41 and 42.

In this embodiment, the overall play between the various discs can be adjusted by means of the screwed plug (38) which can be locked in any setting vis-à-vis the body of the steering housing (5) using a check nut (13).

In this embodiment, the device itself automatically and equally distributes the overall play over the discs 17 and 36 which smoothly position themselves vis-à-vis each other. As a result, the adjustable damping factor is obtained since the fluid (29) will be automatically and equally distributed between the various discs.

Needless to say, the damper in accordance with the invention can be fitted both over the pinion (9), as described above, or under the pinion (9).

Figures 7 and 8 show variants of the embodiments in accordance with figures 2 and 4 respectively, more specifically in respect of applications where a fluid (29) is used, a so-called electro-viscous fluid i.e. a fluid in respect of which the viscosity can be altered depending on the amount of electric tension applied.

In both cases, an electrode (44) is introduced, in this case a ring-shaped electrode, which is surrounded by a low electric insulation material (45), thus ensuring that electric contact is only made with the fluid (29).

This electrode (44) is connected to an electric source (46), the second pole of which is linked to the mass of the vehicle and whereby the tension of this electric source is checked and adjusted by means of an electric control unit (47) which allows continuous control of the aforementioned tension. Any viscosity variant can thus be obtained so as to achieve various damping characteristics in respect of the damping device.

In a special application, the electric control unit (47) will be checked and regulated, based on signals emitted by a vehicle speed sensor (48) and/or a steering wheel sensor, thus ensuring a fully intelligent steering gear damping device.

It is clear that a damper in accordance with the invention can be applied to a rack-and-pinion type steering gear or any other type, whereby the position of the damper is not restricted to the steering housing (5) but will be extended to any other part of the steering column.

It is also clear that the current invention is by no means limited to a damper as described above and as shown in the accompanying drawings but applies to all dampers which fall within the claims as hereinafter specified.

## Claims

1. Damper for the steering gear of a car, characterised in that on a section of the steering column (3, 4, 6) provision has been made for at least one ring-shaped disc (17) which, when rotating the aforementioned section of the steering column (3, 4, 6), is moved within a fluid (29).

2. Damper in accordance with claim 1, characterised in that the unit, filled with a fluid (29) within which the ring-shaped disc (17) is moved, is designed in such a way as to minimise the distance (S) between the sides of a ring-shaped disc (17) and the adjacent walls of the above unit.

3. Damper in accordance with claims 1 or 2, characterised in that a ring-shaped disc (17) is applied which is relatively thin.

4. Damper in accordance with claims 1 or 2, characterised in that a ring-shaped disc (17) is applied which is relatively thick.

5. Damper in accordance with claims 1 or 2, characterised in that provision has been made for several ring-shaped discs (17) which are located between fixed ring-shaped discs (36).

6. Damper in accordance with one of the above claims, characterised in that the above ring-shaped disc or discs (17) have been fitted directly or indirectly on the pinion shaft (4) of a rack-and-pinion gear reduction unit (9-12).

7. Damper in accordance with one of the above claims, characterised in that provision has been made for a ring-shaped disc or discs (17) with a hydraulic sealing ring (26-28).

8. Damper in accordance with one of the above claims, characterised in that the distance (S) is constant.

9. Damper in accordance with one of the claims 1 to 7, characterised in that the distance (S) is variable.

10. Damper in accordance with claim 8, characterised in that the ring-shaped discs (17, 36) and their inner and outer diameters respectively, are provided with a collar by means of which they support each other to maintain a constant distance (S).

11. Damper in accordance with claim 9, characterised in that the discs (17, 36) can move freely on their shafts with respect to each other within certain confines.

12. Damper in accordance with claim 12, characterised in that the inner wall of the body of the steering unit (5) is provided with at least one axially placed tooth, set of ribbing or any similar protrusion (39) by virtue of which the recessed (41) discs (36) are radially fixed.

13. Damper in accordance with claim 11, characterised in that the outer wall of the bush (32) fitted around the pinion shaft (4) is provided with an axially placed tooth, set of ribbing or similar protrusion (40), by virtue of which the recessed (42) discs (17) are radially fixed.

14. Damper in accordance with claims 11 or 12, characterised in that the discs (17) and (36) have been fitted, allowing full play, within the body of the steering unit (5) by a screwed plug (38) and a check nut (44).

15. Damper in accordance with one of the above claims, characterised in that the damper is located over the pinion (9).

16. Damper in accordance with one of the claims 1 to 15, characterised in that the damper is located under the pinion (9).

17. Damper in accordance with one of the above claims, characterised in that the fluid (29) is a fluid with a specific viscosity.

18. Damper in accordance with claim 17, characterised in that the fluid is oil.

19. Damper in accordance with one of the claims 1 to 17, characterised in that the fluid (29) is an electro-viscous fluid.

20. Damper in accordance with claim 19, characterised in that an electrode (44) is immersed in the fluid (29) and is connected to an electric source (46) with adjustable tension, the second pole of which is linked to the mass of the vehicle.

21. Damper in accordance with claim 20, characterised in that the tension of the electric source (46) is adjusted using an electric control unit (47).

22. Damper in accordance with claim 21, characterised in that the electric control unit (47) receives signals from a car speed sensor (458) and/or a steering wheel speed sensor (49).

Fig.1

**Fig.3**

**Fig.2**

*Fig.5*

*Fig.4*

Fig.7

Fig.8

Fig.6

Fig.9

Fig.10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | GB-A-2 087 513 (GENERAL MOTORS COMPANY) * page 1, line 101 - page 2, line 56; figures 2, 3 * | 1-3,5-8, 15,17,18, 9,11-14, 19-22 | B 62 D 7/22 |
| Y | PATENT ABSTRACTS OF JAPAN vol. 13, no. 376 (M-862)(3724) 21 August 1989, & JP-A-O1 131348 (ISHII__KOGYO) 24 May 1989, * the whole document * | 9,11-14 | |
| A | DE-A-3 726 031 (NIFCO) * page 1, lines 47 - 63; figure 2 * | 3 | |
| A | EP-A-0 025 425 (ÖSTERREICHISCHE SALEN-KUNSTSTOFFWERK GESELLSCHAFT) * page 8, paragraph 2 - page 10, paragraph 1; figures 1-4 * | 5,7-9 | |
| Y | MACHINE DESIGN. vol. 60, no. 2, 21 January 1988, CLEVELAND US T.G.Duclos et al.: ""Fluids that thicken electrically"" * pages 42 - 44 * * page 46 * | 19-21 | |
| Y | US-A-4 588 198 (MAZDA) * column 15, line 49 - column 16, line 21; figure 11 * | 22 | |
| A | FR-A-2 625 779 (NIFCO INC.) * abstract; figures 1-5 * | 5,7-9 | |
| A | PATENT ABSTRACTS OF JAPAN vol. 14, no. 135 (M-949)(4078) 14 March 1990, & JP-A-02 3718 (KABAYA IND CO LTD) 09 January 1990, * the whole document * | 19-21 | |

TECHNICAL FIELDS SEARCHED (Int. Cl.5)

B 62 D
F 16 F
F 16 J

−/−

The present search report has been drawn up for all claims

| Place of search | Date of completion of search | Examiner |
|---|---|---|
| The Hague | 02 May 91 | HAGEMAN L.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | EP-A-0 396 354 (SUGATSUNE INDUSTRIAL CO) <br> * abstract; figure 1 * <br> – – – – – | 4 | |
| | | | **TECHNICAL FIELDS SEARCHED (Int. Cl.5)** |
| | The present search report has been drawn up for all claims | | |

| Place of search | Date of completion of search | Examiner |
|---|---|---|
| The Hague | 02 May 91 | HAGEMAN L.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document